# EUROPÄISCHE PATENTSCHRIFT

(11) **EP 1 039 147 B1**
(45) Veröffentlichungstag und Bekanntmachung des Hinweises auf die Patenterteilung: **27.09.2006**
(21) Anmeldenummer: 00104436.1
(22) Anmeldetag: 03.03.2000
(51) Int. Cl.: F15B 15/26

(54) **Vorrichtung zur gesteuerten Betätigung eines Schaltorgans eines Ventils, insbesondere eines Containerschaltventils eines Nutzfahrzeugs**
Means for controlled activation of a valve switching member, especially for a goods vehicle container switching valve
Moyen pour l'actionnement commandé d'un membre de commutation d'un distributeur, surtout d'un distributeur de commutation pour conteneurs d'un camion

(30) Priorität: 24.03.1999 DE 19913380
(43) Veröffentlichungstag der Anmeldung: 27.09.2000
(73) Patentinhaber: KNORR-BREMSE SYSTEME FÜR NUTZFAHRZEUGE GMBH, 80809 München (DE)
(72) Erfinder: Vollmer, Otto, 80689 München (DE)

(56) Entgegenhaltungen:
- DE-A- 3 900 944
- FR-A- 2 327 895
- GB-A- 2 098 685
- GB-A- 2 159 249
- US-A- 393 596
- US-A- 1 720 284
- US-A- 5 074 335
- US-A- 5 176 231

## Beschreibung

Die Erfindung betrifft eine Vorrichtung nach Patentanspruch 1.

Schaltorgane von Schaltventilen, welche vorzugsweise in durch Druckluft betätigbaren Anlagen von Nutzfahrzeugen eingesetzt werden, bestehen im allgemeinen aus einem Schaltstößel oder einer Schaltwelle, welche zum Zwecke der Positionsveränderung durch Druckluft beaufschlagbar sind (DE 41 20 824 C1; EP 0 520 148 A; US 393 596). Schaltorgane der genannten Art können in Ausbildung als Schaltwelle mit einem manuell betätigbaren Schalthebel versehen sein, welcher den Nutzer des Fahrzeugs befähigt, die Schaltwelle sowohl in Axialrichtung zu verschieben als auch bei Betätigung zu drehen. Containerschaltventile für Nutzfahrzeuge sind mit derartigen Schaltwellen versehen, welche pneumatisch von einer normalen Funktionsstellung in eine die Funktionen sperrende Sicherheitsstellung axial verschiebbar sind.

Die Aufgabe der vorliegenden Erfindung besteht darin, Schaltorgane der beispielhaft angesprochenen Art hinsichtlich der Druckbeaufschlagung zu vereinfachen; im Sinne eines Sicherheitskonzepts soll es dabei immer möglich sein, das Schaltorgan in eine Sicherheitsstellung zu verschieben, in welcher die Funktionen des mit dem Schaltorgan ausgestatten Schaltventils gesperrt sind.

Zur Lösung dieser Aufgabe dienen die Merkmale nach dem Patentanspruch 1.

Das Schaltorgan steht unter Einwirkung einer die Verschiebung aus der normalen Funktionsstellung in die Sicherheitsstellung bewirkenden Feder, demnach sind eventuelle Probleme unzureichender Druckluftversorgung ohne Einwirkung auf die Wirkungsweise der gesteuerten Betätigung bzw. Rückführung des Schaltorgans. Durch die über ein Magnetventil in ihrer Rastierkraft vorsteuerbare Rastierung ist eine Positionsfixierung in der normalen Funktionsstellung gewährleistet; bei einer Variante ist auch bei Ausfall einer derartigen Magnetventil-Vorsteuerung die selbsttätige Wirkungsweise der gesteuerten Betätigung des Schaltorgans sichergestellt. Unabhängig davon kann das Schaltorgan manuell zwischen den beiden Stellungen und gegen die Kraft der Rastierung betätigt werden, was immer den gegebenenfalls notwendigen Eingriff am Ventil sicherstellt. Bei Anwendung an einem Containerschaltventil kann die Ansteuerung der Rastierung so gewählt werden, daß die Rastierkraft über einer Mindestgeschwindigkeit von z. B. 15 km/h derart reduziert wird, daß die das Schaltorgan beaufschlagende Druckfeder selbsttätig zur Wirkung kommt und das Schaltorgan in seine sogenannte Sicherheitsstellung (ohne Funktionen) verschiebt.

Vorteilhafte Ausgestaltungen und Weiterbildungen sind in den weiteren Patentansprüchen aufgeführt.

Die Erfindung ist nachfolgend anhand von Ausführungsbeispielen unter Bezugnahme auf die beigefügte Zeichnung erläutert.
- Figur 1: ist eine Teilschnittansicht einer Vorrichtung zur gesteuerten Betätigung eines Schaltorgans; und
- Figur 2: ist eine der Figur 1 vergleichbare Teilschnittansicht einer weiteren Ausführungsform nach der Erfindung.

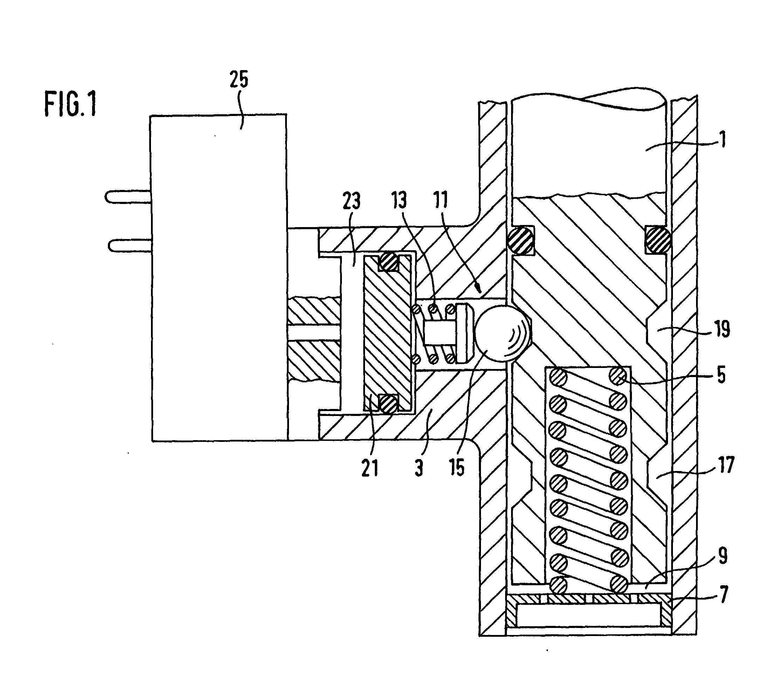

In Fig. 1 der Zeichnung ist im Schnitt das untere Ende eines Schaltorgans 1 dargestellt, welches z. B. die Schaltwelle eines Containerschaltventils bilden kann. Das Schaltorgan 1 ist im Falle der Verwendung an einem Containerschaltventil mit einem manuell betätigbaren (nicht dargestellten) Schalthebel verbunden, welcher es gestattet, das Schaltorgan 1 innerhalb eines Ventilgehäuses 3 sowohl in Längsrichtung als auch im Drehsinn zu bewegen. Mit Hilfe des Schaltorgans 1 können hierdurch in Abhängigkeit von der Längsposition und/oder Drehposition Schaltverbindungen zwischen einem Druckluftvorrat und einem Verbraucher bzw. mehreren Verbrauchern als auch Verbindungen zwischen den Verbrauchern und einer Entlüftung geschaltet werden. Im Falle der Verwendung des Schaltorgans als Schaltwelle eines Containerschaltventils bedeutet dies, daß sich das Schaltorgan in einer Axialposition im Drehsinn betätigen läßt, um für den Container die Stellungen "Heben", "Senken" und als Zwischenstellung die Stellung "Stop" einzustellen. In der Stellung "Heben" sind (nicht dargestellte) durch das Schaltorgan betätigte Ventile wirksam, welche Vorratsluft in einen Luftfederungsbalg bzw. mehrere Luftfederungsbälge für den Container strömen lassen; in der Stellung "Senken" erfolgt eine Entlüftung des Luftfederungsbalges bzw. der Luftfederungsbälge und demnach ein Absenken des Containers, während in der Stellung "Stop" die Energiezufuhr zum Luftfederungsbalg bzw. den Luftfederungsbälgen abgetrennt ist. Bei Schaltventilen der angesprochenen Art können Rückstellmittel vorgesehen sein, welche das Schaltorgan 1 selbsttätig in die Stellung "Stop" zurückführen, wenn der Schalthebel des Schaltorgans freigegeben ist.

Während die vorgenannten Funktionsstellungen "Heben", "Senken" und die Stellung Stop" in einer bestimmten ersten Axialposition des Schaltorgans durch Drehen desselben herbeigeführt werden, ist die zweite Axialposition des Schaltorgans vorgesehen, um eine willkürliche Betätigung zu verhindern. Diese Sicherheits-Schaltstellung des Schaltorgans wird bei Containerschaltventilen der angesprochenen Art vorzugsweise dann eingenommen, wenn das mit einem derartigen Containerschaltventil versehene Fahrzeug fährt. Während der Fahrt soll ein unbeabsichtiges Heben bzw. Senken verhindert werden.

Um die Überführung des Schaltorgans 1 in die Sicherheitsposition zu bewerkstelligen, welche im Falle der Verwendung an einem Containerschaltventil der Position "Fahren" entspricht, sind gemäß der Erfindung Mittel vorgesehen, welche das Schaltorgan 1 in Abhängigkeit von elektrischer Ansteuerung zu verschieben vermögen. Gemäß Darstellung in Fig. 1 ist an der Unterseite des in einem Ventilgehäuse 3 geführten Schaltorgans 1 eine Druckfeder 5 vorgesehen, welche das Schaltorgan 1 in nachfolgend erläuterter Weise in seine (nicht dargestellte) obere Stellung, die Sicherheitsstellung, zu verschieben vermag. Im dargestellten Ausführungsbeispiel ist die Druckfeder 5 in einer Ausnehmung am unteren Ende des Schaltorgans 1 aufgenommen und stützt sich mit ihrem entgegengesetzten Ende an einem Auflager 7 ab, welches gleichzeitig als Auslaß, d. h. zur Entlüftung des die Druckfeder 5 aufnehmenden Raumes 9 dient. Gegenüber dem unteren Ende des Schaltorgans 1 wirkt eine Rastierung 11, bestehend aus einer durch eine Feder 13 verspannten Kugel 15, welche unter seitlicher Verspannung in eine von zwei Nuten 17 und 19 am unteren Ende des Schaltorgans 1 einzugreifen vermag. Die Feder 13 stützt sich an einem Hilfskolben 21 ab, welcher unter Abdichtung in einer seitlichen Bohrung des Ventilgehäuses 3 verschiebbar geführt ist und durch Druck in einer ihn begrenzenden Kammer 23 in Richtung der Kugel 15 beaufschlagt werden kann. Der Hilfskolben 21 steht demnach unter der Krafteinwirkung sowohl des Druckes in der Kammer 23 als auch der an der entgegengesetzten Seite einwirkenden Feder 13. Der Kammer 23 ist ein Magnetventil 25 vorgeschaltet. Das Magnetventil 25 von an sich bekannter Wirkungsweise dient zur Be- und Entlüftung der Kammer 23, sodaß die von der Feder 13 auf die Kugel 15 ausgeübte Federkraft durch die Be- und Entlüftung der Kammer 23 mit Hilfe des Magnetventils 25 beeinflußt werden kann.

Die Wirkungsweise der vorstehend beschriebenen Vorrichtung zur gesteuerten Betätigung des z. B. als Schaltwelle eines Containerschaltventils ausgebildeten Schaltorgans ist wie folgt:

Wenn sich das Schaltorgan 1 in seiner unteren (dargestellten) Funktionsstellung befindet, in welcher die Kugel 15 rastierend in die Nut 19 eingreift, dann ist die Kammer 23 bei nicht erregtem Magnetventil 25 druckbeaufschlagt. Die Kraft der Druckfeder 5 reicht nicht aus, das Schaltorgan gegen den Widerstand der Rastierung 11 nach oben gerichtet in die Sicherheitsstellung zu verschieben. Bei dieser Sicherheitsstellung handelt es sich bei Anwendung bei einem Containerschaltventil um die sogenannte Fahrstellung, welche die Schaltwelle des Containerschaltventils während der Fahrt des Fahrzeugs einnimmt. In dieser Fahr- bzw. Sicherheitsstellung, welche ausgehend von der Stellung "Stop" durch Verschieben der Schaltwelle erreicht wird, ist keine Betätigung im Sinne "Heben" oder "Senken" möglich, was während der Fahrt des Fahrzeugs einen wesentlichen Sicherheitsfaktor darstellt, d. h. es kann nicht zu Beschädigungen der Achsen bzw. des weiteren Aufbaues des Fahrzeuges infolge Lageveränderung des Containers während der Fahrt kommen. Außerdem ist eine unverfälschte Regelung des lastabhängig bestimmten Bremsdruckes sichergestellt. Ein manuelles Verschieben des Schaltorgans 1 gegen die Kraft der Rastierung 11 bei druckbeaufschlagter Kammer 23 ist indessen möglich, um unabhängig von der vorstehend erläuterten Wirkungsweise die Möglichkeit der Umschaltung aus der normalen Funktionsstellung des Schaltorgans in die Sicherheitsstellung (und zurück) zu vermitteln.

Wird die Kammer 23 durch entsprechende Erregung des Magnetventils 25 entlüftet, dann reicht die Kraft der Druckfeder 5 aus, das Schaltorgan 1, ausgehend von der dargestellten unteren Stellung in die (nicht dargestellte) obere Stellung selbsttätig zu verschieben. Das Entlüften der Kammer 23 unter Ansteuerung durch das Magnetventil 25 kann in Anwendung an einem Containerschaltventil z. B. dann erfolgen, wenn das Fahrzeug eine vorbestimmte Geschwindigkeit von z. B. 15 km/h überschreitet, wenn also die Bedingungen für die "Fahrstellung" erreicht sind. Unterhalb dieser Minimalgeschwindigkeit ist die Kammer 23 demnach belüftet und ein gegebenenfalls erforderliches Verschieben des Schaltorgans 1 kann nur manuell gegen die Kraft der Rastierung 11 vorgenommen werden.

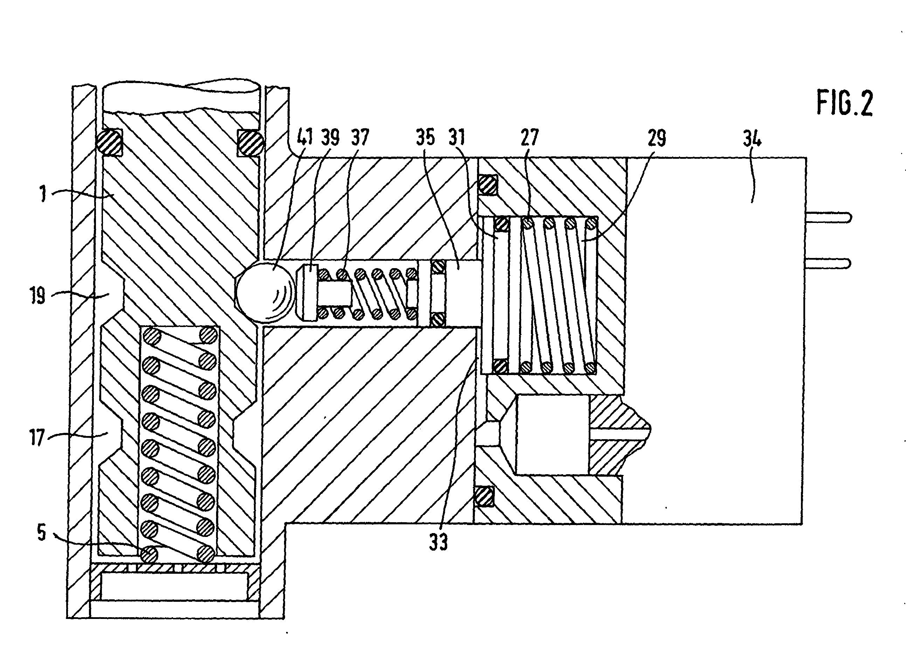

Bei der in Fig. 2 dargestellten weiteren Ausführungsform einer Vorrichtung zur gesteuerten Betätigung eines Schaltorgans ist eine indirekte Betätigung der Rastierung vorgesehen. Die Rastierkraft wird hierbei durch eine Druckfeder 27 erstellt, welche sich in einem Raum 29 einer Verlängerung des Ventilgehäuses befindet und gegenüber einem Hilfskolben 31 wirkt. Der Hilfskolben 31 ist an einer Seite durch die Druckfeder 27 belastet und begrenzt an der entgegengesetzten Seite eine Kammer 33, welche mit Hilfe eines Magnetventils 34 be- und entlüftbar ist. Gemäß Fig. 2 trägt der Hilfskolben eine unter Abdichtung im Ventilgehäuse geführte Verlängerung 35, welche unter Verwendung eines elastischen Gliedes in Form einer Feder 37 und eines Druckstückes 39 auf eine Kugel 41 einwirkt. Die Kugel 41 wirkt in einer der Kugel 15 gemäß der Ausführungsform nach Fig. 1 entsprechenden Weise gegenüber den Nuten 17 und 19 am unteren Ende des Schaltorgans 1.

Die Wirkungsweise der in Fig. 2 dargestellten Ausführungsvariante ist wie folgt: Wird das Magnetventil 34 entregt, wird es also stromlos, dann erfolgt mit Hilfe der Ventilorgane des Ventilmagnets eine Entlüftung der Kammer 33. Die Druckkraft der Druckfeder 27 wird wirksam, d. h., daß über das Druckstück 39 eine Rastierkraft auf die Kugel 41 ausgeübt wird, welche durch die Kraft der Druckfeder 5 nicht überwunden werden kann. Eine manuelle Übersteuerung d. h. Verschiebung des Schaltorgans 1 gegen die Rastierkraft der Druckfeder 27 ist indessen sichergestellt. Bei Erregung des Magnetventils 34 wird durch dessen Ventilorgane die Kammer 33 belüftet, d. h. mit dem Druckluftvorrat des Nutzfahrzeugs in Verbindung gebracht, so daß die Kraft der Druckfeder 27 im wesentlichen aufgehoben wird. In dieser Wirkposition ist die selbsttätige Verschiebung des Schaltorgans 1 durch die Druckfeder 5 möglich, d. h., daß das Schaltorgan 1 aus der in Fig. 2 dargestellten Position verschoben wird, bis die Rastierung der Kugel 41 gegenüber der Nut 17 zur Wirkung kommt. Ein weiteres Verschieben des Schaltorgans ist durch die nunmehr reduzierte Schubkraft der Druckfeder 27 und/oder (nicht dargestellte) Anschläge verhindert.

Bei der Ausführungsform nach Fig. 2 ist wie bei der Ausführungsform nach Fig. 1 durch die Wahl der Erregung/Entregung des Magnetventils und der sich hierbei ergebenden Entlüftung/Belüftung die gegenüber dem Hilfskolben sichergestellt, daß im entregten bzw. stromlosen Zustand des Magnetventils die Rastierkraft aktiv ist, also durch die Kraft der Druckfeder 5 nicht selbsttätig überwunden werden kann. Dies stellt einen Sicherheitsfaktor im Hebe- und Senkbetrieb dar, da ein unbeabsichtiges, selbsttätiges Verschieben des Containeraufbaus in die der Position "Fahren" entsprechende Lage verhindert wird. Durch die indirekte Auslegung der Ausführungsvariante nach Fig. 2 wirkt diese auch bei eventuellem Druckluftverlust.

Die Vorrichtung nach der Erfindung kann grundsätzlich für Schaltventile jeglicher Art, vorzugsweise für Schaltventile von durch Druckluft betätigbaren Anlagen in Nutzfahrzeugen, verwendet werden.

### Bezugszeichenliste

- 1 =: Schaltorgan
- 3 =: Ventilgehäuse
- 5 =: Druckfeder
- 7 =: Auflager
- 9 =: Raum
- 11 =: Rastierung
- 13 =: Feder
- 15 =: Kugel
- 17 =: Nut
- 19 =: Nut
- 21 =: Hilfskolben
- 23 =: Kammer
- 25 =: Magnetventil
- 27 =: Druckfeder
- 29 =: Raum
- 31 =: Hilfskolben
- 33 =: Kammer
- 34 =: Magnetventil
- 35 =: Verlängerung
- 37 =: Feder
- 39 =: Druckstück
- 41 =: Kugel

## Patentansprüche

1. Vorrichtung zur gesteuerten Betätigung eines Ventils, insbesondere eines Containerschaltventils, mit
- einem Schaltorgan (1), das in Längsrichtung zwischen einer ersten Stellung und einer zweiten Stellung verschiebbar ist,
- einer auf ein Ende des Schaltorgans (1) wirkenden Druckanordnung,
- einer Rastierung (11), wobei die Druckanordnung in der ersten Stellung gegen die Rastierkraft der Rastierung (11) einwirkt, und
- einem Magnetventil (35; 34), wobei die Rastierkraft unter Ansteuerung der Rastierung (11) durch das Magnetventil (35; 34) veränderbar ist,
**dadurch gekennzeichnet,**
- **dass** die Druckanordnung das Schaltorgan (1) selbsttätig aus der ersten Stellung in die zweite Stellung verschieben kann,

2. Vorrichtung nach Anspruch 1, **dadurch gekennzeichnet, daß** die Druckanordnung aus einer an einem Ende des Schaltorgans (1) einwirkenden Druckfeder (5) besteht, und daß die Rastierung (11) aus einer gegenüber am Außenumfang des Schaltorgans bestehenden Nuten (17, 19) wirkenden, federverspannten Kugel (15; 41) gebildet ist.

3. Vorrichtung nach Anspruch 2, **dadurch gekennzeichnet, daß** die die Kugel (15) in ihre Rastierposition verspannende Feder (13) an einem Hilfskolben (21) abgestützt ist, welcher in Wirkrichtung der Rastierung durch Druckluft beaufschlagbar ist.

4. Vorrichtung nach einem der vorangehenden Ansprüche, **dadurch gekennzeichnet, daß** das Magnetventil (25) dem Hilfskolben (21) zur gesteuerten Be- und Entlüftung desselben vorgeschaltet ist.

5. Vorrichtung nach Anspruch 2, **dadurch gekennzeichnet, daß** die die Kugel (41) in ihre Rastierposition verspannende Feder (37) an einem Hilfkolben (31) abgestützt ist, welcher in Wirkrichtung der Rastierung durch eine Druckfeder (27) beaufschlagt ist.

6. Vorrichtung nach Anspruch 5, **dadurch gekennzeichnet, daß** die bezüglich der Druckfeder (27) entgegengesetzte Seite des Hilfskolbens (31) eine Kammer (33) begrenzt, welche zum Zwecke der Ansteuerung der Rastierung durch das Magnetventil (34) be- und entlüftbar ist.

7. Vorrichtung nach einem der vorangehenden Ansprüche, **dadurch gekennzeichnet, daß** das Magnetventil (25; 34) baulich mit dem das Schaltorgan und die Rastierung aufnehmenden Gehäuse vereint ist.

8. Vorrichtung nach einem der vorangehenden Ansprüche, **dadurch gekennzeichnet, daß** das Ventil ein Containerschaltventil eines Nutzfahrzeugs ist und daß das Magnetventil (25; 34) bei Überschreiten einer vorbestimmten Mindestgeschwindigkeit des Nutfahrzeugs zum Zwecke der gesteuerten Druckentlastung/Druckbelastung des Hilfskolbens (21; 31) ansteuerbar ist.

9. Vorrichtung nach einem der vorangehenden Ansprüche, **dadurch gekennzeichnet, daß** das Schaltorgan (1) manuell gegen die Kraft der Druckfeder (5) und gegen die Kraft der Rastierung verschiebbar ist.
- dass die erste Stellung eine normale Funktionsstellung ist, in der das Schaltorgan (1) verschiedene Drehpositionen einnehmen kann, um so verschiedene Schaltzustände zu realisieren, und
- dass die zweite Stellung eine Sicherheitsstellung ist, in der das Schaltorgan (1) die verschiedenen Schaltzustände nicht realisieren kann.

## Claims

1. A device for the controlled actuation of a valve, in particular a container switching valve, having
- a switching member (1) which can be moved longitudinally between a first position and a second position,
- a pressure arrangement acting on one end of the switching member (1),
- a locking system (11), the pressure arrangement acting against the locking force of the locking mechanism (11) in the first position, and
- a solenoid valve (35; 34), it being possible to change the locking force by actuating the locking mechanism using the solenoid valve (35; 34),
**characterised in that**
- the pressure arrangement is able to move the switching member (1) automatically from the first position into the second position.

2. A device in accordance with claim 1,
**characterised in that**
the pressure arrangement consists of a pressure spring (5) which acts on one end of the switching member (1), and the locking mechanism (11) takes the form of a spring-tensioned ball (15; 41) which acts against channels (17, 19) existing on the outer periphery of the switching member.

3. A device in accordance with claim 2,
**characterised in that**
the spring (13) which tensions the ball (15) in its locked position rests on an auxiliary piston to which pressure can be applied in the direction of operation of the locking mechanism by means of compressed air.

4. A device in accordance with one of the preceding claims,
**characterised in that**
the solenoid valve (25) is connected upstream of the auxiliary piston (21) in order to let air into and out of said auxiliary piston (21).

5. A device in accordance with claim 2,
**characterised in that**
the spring (37) which tensions the ball (41) in its locked position rests on an auxiliary piston (31) to which pressure can be applied in the direction of operation of the locking mechanism by means of a pressure spring (27).

6. A device in accordance with claim 5,
**characterised in that**
the side of the auxiliary piston (31) opposite the pressure spring (27) delimits a chamber (33) in and out of which air can be let by the solenoid valve (34) in order to actuate the locking mechanism.

7. A device in accordance with one of the preceding claims,
**characterised in that**
the solenoid valve (24; 34) forms one part with the housing which receives the switching member and the locking mechanism.

8. A device in accordance with one of the preceding claims,
**characterised in that**
the valve is a container switching valve in a goods vehicle and when the goods vehicle exceeds a pre-determined minimum speed the solenoid valve (25; 34) can be actuated in order to apply/release pressure on the auxiliary piston (21; 31) in a specific manner.

9. A device in accordance with one of the preceding claims,
**characterised in that**
the switching member (1) can be moved manually against the force of the pressure spring (5) and against the force of the locking mechanism.

## Revendications

1. Dispositif pour actionner de manière contrôlée une vanne, en particulier une vanne de commande d'un conteneur, comportant
- un organe de commande (1) mobile en direction longitudinale entre une première position et une deuxième position,
- un système de pression, qui agit sur une extrémité de l'organe de commande (1),
- un encliquetage (11), dans la première position le système de pression agit alors à l'encontre de la force d'encliquetage de l'encliquetage (11), et
- une électrovanne (35 ; 34), la force d'encliquetage pouvant être modifiée en déclenchant l'encliquetage (11) à l'aide de l'électrovanne (35 ; 34),
**caractérisé en ce que**
- le système de pression peut déplacer l'organe de commande (1) automatiquement de la première position à la deuxième position,
- que la première position est une position normale de fonctionnement, dans laquelle l'organe de commande (1) peut prendre différentes positions de rotation pour réaliser ainsi différents états de commande et
- la deuxième position est une position de sécurité, dans laquelle l'organe de commande (1) ne peut pas réaliser les différents états de commande.

2. Dispositif selon la revendication 1, **caractérisé en ce que** le système de pression consiste en un ressort de pression (5) qui agit à une extrémité de l'organe de commande (1) et que l'encliquetage (11) est formé par une sphère (15 ; 41), contrainte par ressort, qui agit par rapport à des rainures (17, 19) situées sur le pourtour extérieur de l'organe de commande.

3. Dispositif selon la revendication 2, **caractérisé en ce que** le ressort (13) qui contraint la sphère (15) dans sa position d'encliquetage s'appuie sur un piston auxiliaire (21) sur lequel de l'air comprimé peut agir dans la direction effective d'encliquetage.

4. Dispositif selon l'une des revendications précédentes, **caractérisé en ce que** l'électrovanne (25) est montée en amont du piston auxiliaire (21) pour y faire entrer et sortir l'air de façon contrôlée.

5. Dispositif selon la revendication 2, **caractérisé en ce que** le ressort (37) qui contraint la sphère (41) dans sa position d'encliquetage s'appuie sur un piston auxiliaire (31) sur lequel un ressort de pression (27) agit dans la direction effective d'encliquetage.

6. Dispositif selon la revendication 5, **caractérisé en ce que** le côté - du piston auxiliaire (31) - opposé au ressort de pression (27) délimite une chambre (33) où l'électrovanne (34) peut faire entrer et sortir l'air afin de déclencher l'encliquetage.

7. Dispositif selon l'une des revendications précédentes, **caractérisé en ce que** l'électrovanne (25 ; 34) est réunie structurellement au boîtier qui reçoit l'organe de commande et l'encliquetage.

8. Dispositif selon l'une des revendications précédentes, **caractérisé en ce que** la vanne est une vanne de commande pour conteneur d'un véhicule utilitaire et que l'électrovanne (25 ; 34) peut être déclenchée quand le véhicule dépasse une vitesse minimale prédéfinie afin de charger ou de décharger en pression de façon contrôlée le piston auxiliaire (21 ; 31).

9. Dispositif selon l'une des revendications précédentes, **caractérisé en ce que** l'organe de commande (1) peut être déplacé à la main à l'encontre de la force du ressort de pression (5) et à l'encontre de la force de l'encliquetage.
